# EUROPEAN PATENT APPLICATION

(11) **EP 4 838 376 A1**
(43) Date of publication of application: **11.11.2026**
(21) Application number: 25174858.8
(22) Date of filing: 07.05.2025
(51) Int. Cl.: G06F 16/2457, G06F 40/30, G06N 5/022

(54) **SYSTEM AND METHOD FOR GENERATING CONTEXT-AWARE RESPONSES TO USER QUERIES PERTAINING TO AN ENGINEERING DOMAIN**

(71) Applicant: Siemens Schweiz AG, 8047 Zürich (CH)
(72) Inventor: BUXY, Debasis, 700036 Kolkata (IN); MAHALE, Sandeep, 411057 Pune, Maharashtra (IN); PARIT, Sachin Tatoba, 411045 Pune (IN); SASWADE, Mayur, 411045 Pune, Maharashtra (IN)
(74) Representative: Patentanwaltskanzlei WILHELM & BECK

(57) **Abstract**

Disclosed is a system (100) and a method (500) for generating context-aware responses to user queries pertaining to an engineering domain. The system (100) includes a user device (102) for receiving a user query (302A) pertaining to engineering resources and/or engineering workflows associated with a software application (402), a storage unit (104) storing a knowledge base (106) with domain-specific information, and a processing unit (108). The processing unit (108) receives the user query (302A), creates an index of the domain-specific information, parses the user query (302A) to determine and retrieve an augmented context (314) using the index, and provides the user query (302A) and the augmented context (314) to a language model (224) to generate a context-aware response (404). Advantageously, the system (100) and method (500) provide a significant improvement over traditional help documentation by offering an engaging, efficient, and user-friendly solution that enhances productivity and user experience.

## Description

### TECHNICAL FIELD

The present disclosure generally relates to computer-implemented information retrieval and response systems. More particularly, the present disclosure relates to a system and a method for generating context-aware responses to user queries pertaining to an engineering domain.

### BACKGROUND

Software applications are widely used to configure and manage engineering resources and workflows involving diverse devices such as controllers, routers, gateways, network switches, and field devices. Engineering resources, such as tools, features, and documentation pertaining to specifications, guidelines, standards, protocols, and best practices, play a crucial role in ensuring effective software setup and operation. Engineering workflows, which involve series of steps or procedures required to achieve specific engineering outcomes, often involve user interactions with multiple user interface elements within the software applications. These user interface elements can include menus, buttons, input fields, dialog boxes, and other interactive components. The engineering workflows can exhibit significant variability depending on the engineering domain and the user experience (UX) design of the software applications involved. For example, products / applications in building automation and process automation utilize such engineering resources and engineering workflows extensively.

Engineers often need to consult extensive and detailed documentation, such as user manuals, technical specifications, help files, training materials such as but not limited to training videos, workflow documentation, and use cases documentation to gather information pertaining to engineering resources and/or engineering workflows to perform their tasks. Additionally, dissemination of tacit knowledge, which includes the unrecorded skills and insights acquired through experience, presents a challenge as it can be difficult to obtain and share among engineers, potentially slowing down information dissemination and onboarding of new team members. The existing help documentation associated with the software applications is typically static in nature, providing a passive and non-engaging user experience. The static nature of the help documentation can impede efficient information retrieval, as users may struggle to quickly locate the relevant information needed to address their specific engineering tasks or workflows. Moreover, the steep learning curve associated with navigating through voluminous help documents can hinder the productivity of novice users of these software applications. These users may need to resort to time-consuming manual searches to locate the necessary information, which can impair their overall productivity.

As an example, in the domain of building automation and control, engineers are required to perform various tasks involving building automation software resources and control workflows. The existing static help documentation, although comprehensive, fails to engage users effectively and does not facilitate efficient information retrieval. This lack of interactivity can discourage users from exploring advanced features of the building automation and control software application, leading to suboptimal utilization of resources and increased engineering time and costs.

Traditional approaches to addressing these challenges have included dynamic content such as animated .gif files and explanatory videos within help documents. Context-specific help features, such as tooltips or navigation to predefined contexts within documentation, have also been implemented to assist users in locating relevant information. Additionally, quick word search functionalities enable users to search for user interface elements and associated operations.

While user navigation through help documentation can be useful, it is still time-consuming and can be inefficient in scenarios where users must perform extensive navigation through multiple layers of information to locate specific details, lacking engaging and adaptive interaction that can significantly enhance user experience and efficiency. Such traditional methods may overwhelm users with an abundance of irrelevant information for their needs, complicating the information retrieval process. Furthermore, in critical situations where quick user action is necessary, the delays caused by navigating through traditional help systems can lead to user frustration and/or missed interventions. Consequently, existing help features are often insufficient in providing immediate and relevant solutions to users' specific problems, necessitating more advanced and adaptive help mechanisms.

In light of the above, there exists a need in the art to address, mitigate, or overcome at least in part the aforementioned challenges.

### SUMMARY

Accordingly, it is an object of the present disclosure to provide a system and a method for generating context-aware responses to user queries pertaining to an engineering domain. The disclosed system and method leverage artificial intelligence and natural language processing to understand the user's intent and provide relevant, personalized, and interactive guidance to assist the user in efficiently configuring and managing a domain compatible software application and associated engineering tasks.

One aspect of the present disclosure relates to a system for generating context-aware responses to user queries pertaining to an engineering domain. The system includes one or more user devices, one or more storage units, and one or more processing units. The one or more processing units are communicably coupled to the one or more user devices and the one or more storage units. The one or more user devices are configured to receive a user query pertaining to at least one of one or more engineering resources or one or more engineering workflows associated with a software application compatible with the engineering domain. The one or more storage units are configured to store one or more knowledge bases comprising domain-specific information pertaining to the one or more engineering resources and the one or more engineering workflows associated with the software application. The one or more processing units are configured to: receive the user query from the one or more user devices, create one or more indexes of the domain-specific information stored in the one or more knowledge bases, parse the user query to determine and retrieve an augmented context for the user query from the one or more knowledge bases using the one or more indexes, and provide the user query and the retrieved augmented context to a language model to generate a context-aware response corresponding to the user query.

Exemplary embodiments and implementations of the present disclosure will now be described in further detail. It should be understood that the following descriptions are provided for explanatory purposes only and are not intended to limit the scope of the disclosure.

The embodiments disclosed herein involve or relate to artificial intelligence (AI). AI generally encompasses the use of computerized tools and techniques, such as machine learning, to perceive, synthesize, infer, predict, and/or generate information. Al systems typically rely on a combination of hardware and software components as a foundation for rapidly performing complex operations. These systems may utilize one or more models, which have a particular configuration defined by various parameters and the relationships between the parameters. While an initial model configuration may be established, the models can adapt and improve their capabilities over time by learning from input data, such as training data. For example, a dataset may be provided as input to a model, which then produces an output based on the dataset and its current model configuration. Subsequently, the model may receive additional information, such as validation data, reference data, or feedback, and automatically adjust its internal configuration to enhance the quality of the output. The synergistic combination of powerful model parameters and sufficiently large datasets, coupled with high-performance hardware, enables the creation of advanced Al models. These advanced models allow Al systems to interpret and process vast amounts of information in ways that would be impractical, if not impossible, for human beings to accomplish manually.

The system of the present disclosure includes one or more user devices. The one or more user devices are configured to receive a user query pertaining to at least one of one or more engineering resources or one or more engineering workflows associated with a software application compatible with the engineering domain.

Throughout the present disclosure, the term "user devices" is defined to encompass any device or an interface that facilitates user input of queries into the system. Non-limiting examples of user devices include keyboard or keypad, mouse or other pointing devices, touchscreen input devices, microphone or speech recognition devices (such as speech-to-text systems), brain-computer interfaces (BCls), and the like. Other user devices that enable user input are also contemplated within the scope of the present disclosure. The "user query" refers to a natural language query or request submitted by the user to the system, seeking information or guidance related to the engineering domain. The user query is expressed in everyday human language, such as English, German, or any other spoken language. Preferably, the user query (i.e., natural language input) is received as text; however, when the user query is received through other means, it is preferably converted into a textual format for further processing. As non-limiting examples, a user may submit a user query such as *"How do I configure a programmable logic controller for a building automation system?"* or *"What are the steps to troubleshoot a faulty sensor in a process control system?".*

As used herein, the term "engineering resources" refers to technical assets and materials used in the engineering domain. The engineering resources may be used to support the design, development, testing, and maintenance of engineering systems, products, or processes, and can take the form of documentation, software, hardware, or other tangible or intangible assets. In an embodiment, the one or more engineering resources include at least one of tools, features, specifications documentation, guidelines documentation, standards documentation, protocols documentation, or predefined best practices documentation associated with at least one of the engineering domain or the software application compatible with the engineering domain. As an example, in the engineering domain of building automation, a user may submit a query pertaining to engineering resources, specifically requesting configuration information for a particular component, such as: *"Show me the configuration parameters for* a *temperature sensor in a heating, ventilation, and air-conditioning (HVAC) system".*

As used herein, the term "engineering workflows" pertains to a sequence of steps or procedures necessary to achieve specific engineering outcomes. These engineering workflows may encompass user interactions with various user interface elements within a software application, such as menus, buttons, input fields, dialog boxes, and other interactive components. As an example, in the domain of building automation and control, a user may submit a query related to engineering workflows, for instance: *"How do I configure the commissioning laptop network connection?".* The workflow may necessitate navigation through multiple software screens, the selection of specific options, and the entry of configuration parameters, all of which must be performed in a precise sequence to ensure correct execution.

As used herein, the phrase "software application compatible with the engineering domain" refers to a software application specifically designed to support the engineering tasks and workflows associated with a particular engineering domain. Such software applications may include, but are not limited to, computer-aided design (CAD) software, simulation software, configuration software, and other types of software tools utilized within engineering domains. For example, in the domain of building automation and control, a software application compatible with the engineering domain may include a building automation configuration tool that allows users to design, configure, and commission building automation systems.

The system of the present disclosure further includes one or more storage units configured to store one or more knowledge bases having domain-specific information pertaining to the one or more engineering resources and the one or more engineering workflows associated with the software application. The one or more storage units can include, but are not limited to, hard disk drives, solid-state drives, flash memory devices, random access memory (RAM) devices, or other types of data storage devices.

In the present disclosure, the term "knowledge base" refers to a collection of data and information that facilitates efficient retrieval and use of the information. A knowledge base may take the form of a physical database, a digital repository, or a combination thereof. The one or more knowledge bases described in the present disclosure include domain-specific information, which refers to information that is pertinent to a specific engineering domain, such as building automation, industrial automation, or process control.

In an embodiment, the one or more knowledge bases include domain-specific information pertaining to the one or more engineering resources including at least one of: tools, features, specifications, guidelines, standards, protocols, or predefined best practices associated with at least one of the engineering domain or the software application. For example, in the domain of building automation and control, the one or more knowledge bases may include domain-specific information such as tools for device configuration, features for network setup, detailed technical specifications for system components, guidelines for optimal system design, communication protocol standards, and predefined best practices for system architecture.

In an embodiment, the one or more knowledge bases comprise documentation pertaining to the one or more engineering workflows associated with the software application, the documentation comprising at least one of: help documentation comprising information pertaining to usage, features, and troubleshooting associated with the software application; or user workflow documentation comprising information pertaining to a plurality of sample engineering workflows associated the software application. For example, in the domain of building automation and control, the one or more knowledge bases may include help documentation and user workflow documentation that provide detailed information on using the building automation configuration tool, troubleshooting common issues, and sample engineering workflows, such as configuring HVAC systems, setting up lighting controls, and integrating security systems. This documentation enables users to efficiently navigate and utilize the software application to achieve their engineering objectives.

The system of the present disclosure includes one or more processing units communicably coupled to the one or more user devices and the one or more storage units.

Throughout the present disclosure, the term "processing unit" means any type of computational circuit, such as but not limited to, a microprocessor, a microcontroller, a complex instruction set microprocessor, a reduced instruction set microprocessor, a very long instruction word microprocessor, an explicitly parallel instruction computing microprocessor, a graphics processor, a digital signal processor (DSP), or any other type of processing circuit. The system may be implemented using a single processing unit or distributed across multiple processing units, depending on the required computational resources for the context-aware response generation, scalability, and performance considerations.

The one or more processing units are configured to receive the user query from the one or more user devices. The user query may be received through a communication interface, such as a network connection, that enables data exchange between the one or more user devices and the one or more processing units.

The one or more processing units are configured to create one or more indexes of the domain-specific information stored in the one or more knowledge bases. The one or more indexes refer to data structures that facilitate efficient retrieval and searching of the domain-specific information, allowing the system to quickly locate and access relevant information in response to the user query. The one or more indexes may be created based on various attributes of the domain-specific information, such as but not limited to keywords, phrases, concepts, entities, and relationships, among others. Across embodiments, the one or more indexes can include, but are not limited to, inverted indexes, hash tables, binary search trees, and other types of data structures that enable fast and efficient searching and retrieval of data. In one embodiment, the domain-specific information is tokenized and stored in a keyword database with one or more keyword (inverted) indexes. The one or more indexes can be stored in various types of storage systems, such as but not limited to cloud storage, to ensure scalability and accessibility.

In some embodiments, the one or more processing units are configured to create the one or more indexes of the domain-specific information as one of: one or more keyword indexes, one or more vector indexes, or a combination thereof. In an embodiment wherein the one or more processing units create a combination of one or more keyword indexes and one or more vector indexes, the system leverages the distinct advantages of each index type for efficient retrieval of domain-specific information. For example, the one or more keyword indexes can be used to quickly identify relevant documents or concepts, while the one or more vector indexes can be used to rank the results based on their semantic similarity to the user query.

The one or more processing units are configured to parse the user query to determine and retrieve an augmented context for the user query from the one or more knowledge bases using the one or more indexes.

In one embodiment, where the one or more indexes are keyword indexes, parsing the user query involves analysing the user query to identify key elements such as keywords and/or phrases contained therein. Once these key elements are identified, the one or more processing units can access the one or more keyword indexes to efficiently locate and retrieve relevant information from the one or more knowledge bases. This retrieved relevant information provides an augmented context for the user query. As used herein, the term "augmented context" refers to the enriched and comprehensive information accessed from the one or more knowledge bases to provide a deeper, context-relevant understanding of the user query. The augmented context may include not only the directly retrieved data related to the identified keywords and/or phrases, but also additional relevant details, related concepts, and supplementary information that can enhance the overall context of the user query. Advantageously, the augmented context allows the system to construct a more complete picture of the user's intent as compared to the initial user query, facilitating more accurate and context-aware response retrieval.

In another embodiment, the one or more processing units are configured to create the one or more indexes by generating vector embeddings for the domain-specific information stored in the one or more knowledge bases using an embedding model, and cause storage of the vector embeddings in one or more vector databases in a structured format. The embedding model used to generate the vector embeddings is a machine learning model, such as a neural network, that is trained on vast domain-specific information to learn the semantic relationships between the data entities. The embedding model can be trained on the domain-specific information using a variety of training methods, such as supervised learning, unsupervised learning, or semi-supervised learning. The embedding model can take the domain-specific information as input and output a vector representation of the information, where each vector represents a data entity in a multi-dimensional space. Across implementations of the embodiment, techniques such as but not limited to Word2Vec, Bidirectional Encoder Representations from Transformers (BERT), Node2Vec, or a feasible combination thereof can be employed for generating the vector embeddings.

For example, in the engineering domain of building automation and control, the embedding model can be trained on a large corpus of text data related to building automation systems, including but not limited to, technical documentation, user manuals, workflow documentation, configuration guides, and other information related to software tools. The text data can include information about various data entities, such as devices (e.g. sensors, actuators, controllers), systems (e.g. HVAC, lighting, security), and concepts (e.g. energy efficiency, indoor air quality). Using natural language processing (NLP) techniques, the embedding model can analyse the text data and identify patterns and relationships between the data entities.

In the embodiment, the one or more processing units are further configured to analyse the vector embeddings stored in the one or more vector databases to identify relationships between data entities in the domain-specific information and create one or more graph databases comprising vector embeddings of nodes and edges reflecting the said relationships.

In the embodiment, the analysis of the vector embeddings may be performed using the embedding model used to generate the vector embeddings. The embedding model is trained on a large corpus of text data including but not limited to engineering domain-specific technical documentation, user manuals, and configuration guides, among others. This training data allows the embedding model to learn semantic relationships between data entities in the engineering domain. The embedding model can learn to represent these data entities as vectors in a high-dimensional space, where semantically similar entities are mapped to nearby points in the space.

In an embodiment, the identified relationships between data entities in the domain-specific information are used to create the one or more graph databases comprising vector embeddings of nodes and edges. The nodes in the one or more graph databases represent the data entities, such as devices, systems, and concepts, and the edges represent the relationships between the data entities. The vector embeddings of the nodes and the edges are used to capture the semantic relationships between the data entities, allowing for efficient querying and retrieval of the domain-specific information. Advantageously, the one or more graph databases can be used to support a variety of applications, such as querying, reasoning, and inference, providing a powerful tool for analysing and understanding the domain-specific information.

In the embodiment, the one or more processing units are configured to determine the augmented context for the user query from the one or more knowledge bases by generating vector embeddings of the user query and mapping the vector embeddings of the user query to the vector embeddings of the nodes and the edges in the one or more graph databases.

In the embodiment, to generate the vector embeddings of the user query, the one or more processing units may utilize the embedding model that was used to generate the vector embeddings of the domain-specific information. The embedding model takes the user query as input and outputs a vector representation of the query, which captures the semantic meaning of the query. The vector embeddings of the user query are then mapped to the vector embeddings of the nodes and the edges in the one or more graph databases. This is done by computing the similarity between the vector embeddings of the user query and the vector embeddings of the nodes and the edges in the one or more graph databases. The similarity may be computed using a distance metric, such as but not limited to cosine similarity or Euclidean distance, which measures the proximity between the vector embeddings in the multi-dimensional space. The nodes and the edges in the one or more graph databases that have vector embeddings that are similar to the vector embeddings of the user query are identified as relevant to the user query.

The relevant nodes and edges are then used to determine the augmented context for the user query.

In one embodiment, the domain-specific information stored in the one or more knowledge bases is organized into a plurality of chunks, each chunk comprising specific information related to an aspect of the software application and/or the engineering domain. This organization allows for efficient retrieval and processing of the domain-specific information, as each chunk can be accessed and analysed independently.

In the embodiment, the one or more processing units are configured to parse the user query to determine relevant data pertinent to the user query from the plurality of chunks using the one or more indexes. The parsing process involves analysing the user query to identify the key concepts, entities, and relationships that are relevant to the user query. The one or more indexes are then used to map the key concepts, entities, and relationships to the corresponding chunks of domain-specific information. Once the relevant chunks have been identified, the one or more processing units are configured to combine data elements of the relevant data when the relevant data is scattered across the plurality of chunks, to provide the augmented context to the user query. Advantageously, the one or more processing units can bring together the disparate pieces of relevant data to provide a more complete and accurate understanding of the user query.

The one or more processing units are configured to provide the user query and the retrieved augmented context from the one or more knowledge bases to a language model to generate a context-aware response corresponding to the user query.

As used herein, the term "language model" refers to a computer-implemented machine learning model designed to represent and understand a language domain. Such a model employs advanced statistical and computational techniques to process and generate human-like language. By being trained on extensive corpus of textual data, the language model learns the probability distribution of word sequences, thus enabling it to predict subsequent words in a sentence, generate coherent text, translate languages, and execute various natural language processing (NLP) tasks. The language model may be trained on the corpus of textual data to learn patterns, relationships, and statistical dependencies between words, phrases, or other linguistic elements. The language model may be implemented using, but not limited to, neural networks, transformer architectures, recurrent neural networks, or other machine learning techniques, and may leverage generative artificial intelligence (AI) capabilities to create novel text, responses, or other content that is contextually relevant and coherent. The language model may be configured to perform various natural language processing (NLP) tasks including, but not limited to, text generation, text completion, translation, summarization, question answering, or text classification.

In an embodiment, capabilities of the language model may be accessed by the user in a particular domain-specific software environment (such as, but not limited to, a building automation and control software). The software environment may provide a user-interface to facilitate interaction of the user with the language model. This user-interface may include features such as text input fields, voice recognition capabilities, and interactive dialogue boxes that allow users to enter queries and receive responses in an intuitive manner. Additionally, the user-interface may offer customization options to tailor the interaction based on the user's specific needs and preferences within the domain. In another embodiment, the language model may be accessed through a stand-alone user interface. This stand-alone interface can be a dedicated application or web-based platform that allows users to interact with the language model independently of any specific software environment.

As used herein, the term "context-aware response" refers to a response takes into account the specific context in which the user query is being asked. This context may relate to the domain-specific information, the user's intent, and data entities and relationships that are pertinent to the user query. The context-aware response is generated by the language model, which uses the user query and the retrieved augmented context to provide a response that is tailored to the specific needs and requirements of the user. The context-aware response may be generated using a combination of natural language processing (NLP) and machine learning algorithms, which allow the language model to understand the nuances of the user query and the augmented context, and to generate a response that is tailored to the specific needs and requirements of the user.

The context-aware response can include, but is not limited to, a set of instructions or steps to follow, a list of relevant data entities or relationships, a summary of the relevant information, among others. The response is generated based on the patterns and relationships learned by the language model from the augmented context and the user query and is designed to provide the user with accurate and relevant information.

For example, in the engineering domain of building automation and control, if the user query is *"How do I configure an M-Bus device?",* the context-aware response may include a step-by-step guide to configuring the M-Bus device, including specific instructions and settings to use. The response might also include a list of relevant data entities, such as the M-Bus device's manufacturer and model number, as well as any relevant relationships, such as the M-Bus device's compatibility with other systems or devices.

In an embodiment, the language model is configured to generate the context-aware response corresponding to the user query based on a history of user interactions with the language model prior to receiving the user query. In the embodiment, the language model may access and analyse a history of user interactions in a chat session, including previous user queries, responses, and any user feedback. This history may be used to inform the generation of the context-aware response to a specific user query, allowing the language model to take into account the user's previous questions, preferences, and/or behaviour. For example, if a user has previously asked questions about configuring an M-Bus device, the language model may use this information to generate a more detailed and specific response to a subsequent question about troubleshooting an M-Bus device.

Advantageously, the consideration of user interaction history to generate context-aware responses provides more personalized and relevant responses to the user, improving user satisfaction and engagement. Additionally, it enables the language model to learn and adapt over time, improving its ability to understand and respond to user queries. Furthermore, the language model can also use the history of user interactions to identify areas where the user may need additional support or training, and to provide targeted recommendations and resources. This can help to improve the overall user experience and to reduce the likelihood of errors or misunderstandings.

In an embodiment, the system of the present disclosure may be configured specifically for generating context-aware responses pertaining to the engineering domain of building automation and control. In this embodiment, the one or more knowledge bases comprise domain-specific information pertaining to building automation resources and building control workflows.

In a further embodiment, the building automation resources include at least one of: tools (e.g. configuration software, commissioning tools, diagnostic tools), features (e.g. alarm management, trend analysis, energy reporting), specifications (e.g. device communication protocols, data formats, system architecture requirements), guidelines (e.g. installation guides, user manuals, troubleshooting guides), standards (e.g. ASHRAE, IEC, ISO), protocols (e.g. safety protocols, security protocols, regulatory compliance protocols), or predefined best practices associated with building automation and control, such as device configurations, network architectures, control algorithms, energy efficiency strategies, maintenance schedules, security procedures among others.

As used herein, the term "building control workflows" pertains to a sequence of steps or procedures necessary to achieve specific building automation and control outcomes, such as controlling temperature, humidity, and air quality in a building, managing lighting levels and schedules, or optimizing energy consumption. These building control workflows may encompass user interactions with various user interface elements within building automation and control software applications, such as menus, buttons, input fields, dialog boxes, and other interactive components.

Advantageously, this configuration enables the system to provide highly accurate and relevant responses to user queries related to building automation and control. Further, the system according to the embodiment facilitates more precise and informed decision-making in building automation and control, reducing errors and improving overall building operations, energy efficiency, and building occupant comfort.

Another aspect of the present disclosure relates to a method for generating context-aware responses to user queries pertaining to an engineering domain. The method comprises receiving, by one or more processing units, a user query pertaining to at least one of one or more engineering resources or one or more engineering workflows associated with a software application compatible with the engineering domain. The method comprises creating, by the one or more processing units, one or more indexes of domain-specific information stored in one or more knowledge bases, the domain-specific information pertaining to the one or more engineering resources and the one or more engineering workflows associated with the software application. The method comprises parsing, by the one or more processing units, the user query to determine and retrieve an augmented context for the user query from the one or more knowledge bases using the one or more indexes. The method comprises providing, by the one or more processing units, the user query and the retrieved augmented context to a language model to generate a context-aware response corresponding to the user query.

In an embodiment, the method is configured for generating context-aware responses to user queries pertaining to the engineering domain of building automation and control, and the one or more knowledge bases comprise domain-specific information pertaining to building automation resources and building control workflows.

In an embodiment, the one or more knowledge bases comprise domain-specific information pertaining to the one or more engineering resources including at least one of tools, features, specifications, guidelines, standards, protocols, or predefined best practices associated with at least one of the engineering domain or the software application.

In an embodiment, the one or more knowledge bases comprise documentation pertaining to the one or more engineering workflows associated with the software application, the documentation comprising: help documentation comprising information pertaining to usage, features, and troubleshooting associated with the software application, and user workflow documentation comprising information pertaining to a plurality of sample engineering workflows associated with the software application.

In an embodiment, creating the one or more indexes of the domain-specific information comprises: generating vector embeddings for the domain-specific information stored in the one or more knowledge bases using an embedding model, and causing storage of said vector embeddings in one or more vector databases in a structured format. In the embodiment, determining the augmented context for the user query from the one or more knowledge bases comprises: analysing the vector embeddings stored in the one or more vector databases to identify relationships between data entities in the domain-specific information, for creating one or more graph databases comprising vector embeddings of nodes and edges reflecting the said relationships; generating vector embeddings of elements in the user query; and mapping the vector embeddings of the elements in the user query to the vector embeddings of the nodes and the edges in the one or more graph databases, to provide the augmented context for the user query.

In an embodiment, the language model is configured to generate the context-aware response corresponding to the user query based on a history of user interactions with the language model prior to the user query.

Advantageously, the disclosed system and method address the inefficiencies and limitations of static help documentation by providing dynamic, context-aware responses to user queries. This interactive and adaptive approach significantly enhances the user experience by ensuring that relevant information is quickly and accurately retrieved, thereby reducing the time users spend searching through extensive documentation. The use of artificial intelligence and natural language processing allows the system to understand the user's intent and provide personalized guidance, which is beneficial in engineering domains where workflows and resources can be complex and varied.

The integration of domain-specific information one or more knowledge bases ensures that the system provides highly relevant information tailored to the specific engineering tasks and workflows of the user. Consequently, software learning curve for novice users is reduced, allowing them to become proficient with the software applications more quickly, thereby improving their overall productivity. By providing immediate and precise responses, the system and the method of the present disclosure minimize the need for time-consuming manual searches and trial-and-error methods, thus preventing frustration and enhancing user satisfaction.

Furthermore, the interactive nature of the system encourages users to explore and utilize advanced features of engineering software applications, leading to optimal resource utilization and potentially reducing engineering costs. Unlike traditional help documentation that overwhelms users with irrelevant information, the context-aware responses are specifically tailored to the user's current task and context, thereby simplifying the information retrieval process whilst also improving time and cost efficiency.

In critical situations where quick user action is necessary, the system's ability to provide immediate and contextually relevant solutions can prevent delays and missed interventions, ensuring that users can address issues promptly and effectively. This is important in engineering domains where timely and accurate responses are crucial for maintaining system performance and reliability.

The disclosed system and method provide a significant improvement over traditional help documentation by offering an engaging, efficient, and user-friendly solution that enhances productivity, reduces errors, and improves the overall user experience in managing engineering resources and/or workflows.

The object of the present disclosure is also achieved by a computer-program product having machine-readable instructions stored therein, that when executed by one or more processing units, cause the one or more processing units to perform the aforementioned method steps.

The object of the present disclosure is also achieved by a computer-readable storage medium which comprises instructions which, when executed by one or more processing units, cause the one or more processing units to perform the aforementioned method steps.

Features which are described herein in the context of separable aspects and embodiments of the disclosure may be used together and/or be interchangeable. Similarly, features described in the context of a single embodiment may also be provided separately or in any suitable subcombination.

The above-mentioned aspects, features, embodiments, and advantages will become more apparent and understandable with the following description of embodiments of the disclosure in conjunction with the corresponding drawings. The illustrated embodiments are intended to illustrate but not limit the disclosure.

### BRIEF DESCRIPTION OF FIGURES

The present disclosure is further described hereinafter with reference to illustrated embodiments shown in the accompanying drawings, in which:
- FIG 1: is a block diagram of a system for generating context-aware responses to user queries pertaining to an engineering domain, in accordance with an exemplary embodiment of the present disclosure;
- FIG 2: is a block diagram of an exemplary architecture, in which an embodiment of the present disclosure can be implemented;
- FIG 3: is a schematic diagram that illustrates components and data interactions associated with the processing of user queries, in accordance with an exemplary embodiment of the present disclosure;
- FIG 4: is a schematic diagram illustrating an exemplary implementation for delivering a generated context-aware response to a user;
- FIG 5: is a flow diagram of a method for generating context-aware responses to user queries pertaining to an engineering domain, in accordance with an exemplary embodiment of the present disclosure;
- FIG 6: is a flow diagram illustrating method sub-steps involved in creating one or more indexes of domain-specific information, in accordance with an exemplary embodiment of the present disclosure; and
- FIG 7: is a flow diagram illustrating method sub-steps involved in determining an augmented context for a user query, in accordance with an exemplary embodiment of the present disclosure.

Like reference signs have been used to indicate corresponding or similar elements throughout the drawings. It should be understood that like reference signs may be used to refer to the same or similar elements in different embodiments illustrated in the drawings.

### DETAILED DESCRIPTION

Hereinafter, embodiments for carrying out the present disclosure are described in detail. The various embodiments are described with reference to the accompanying drawings, wherein like reference signs are used to refer to like elements throughout. In the following description, for the purpose of explanation, numerous specific details are set forth in order to provide a thorough understanding of one or more embodiments. It may be evident that such embodiments may be practiced without these specific details.

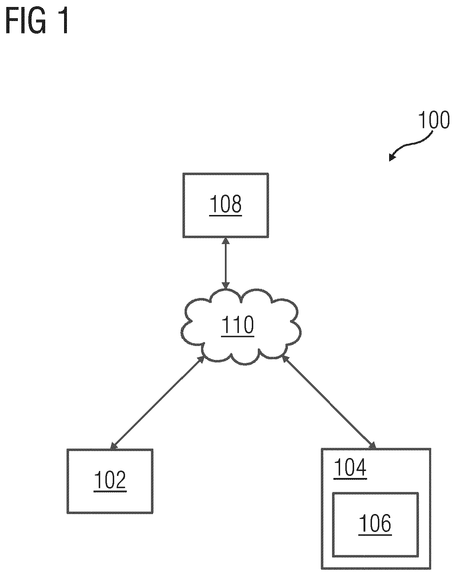

FIG 1 is a block diagram of a system 100 for generating context-aware responses to user queries pertaining to an engineering domain, according to an exemplary embodiment of the present disclosure. The system 100 includes one or more user devices 102, one or more storage units 104 configured to store one or more knowledge bases 106, and one or more processing units 108.

The one or more user devices 102 are responsible for receiving a user query pertaining to at least one of: one or more engineering resources or one or more engineering workflows associated with a software application compatible with the engineering domain. Throughout the present disclosure, the term "user devices" is defined to encompass any device or an interface that facilitates user input of queries into the system. Non-limiting examples of the one or more user devices 102 include keyboard or keypad, mouse or other pointing devices, touchscreen input devices, microphone or speech recognition devices (such as speech-to-text systems), brain-computer interfaces (BCls), and the like. Other user devices that enable user input are also contemplated within the scope of the present disclosure.

The "user query" refers to a natural language query or request submitted by the user to the system, seeking information or guidance related to the engineering domain. The user query is expressed in everyday human language, such as English, German, or any other spoken language. The user query may be unstructured, and can vary significantly in phrasing, grammar, and complexity, as it is formulated based on how humans naturally communicate. The user query is typically articulated in a conversational manner rather than in a formal programming or a database query language. Preferably, the user query (i.e., natural language input) is received as text; however, when the user query is received through other means, it is preferably converted into a textual format for further processing. As non-limiting examples, a user may submit a user query such as *"How do I configure a programmable logic controller for* a *building automation system?"* or *"What are the steps to troubleshoot a faulty sensor in a process control system?".*

The term "engineering workflows" pertains to a sequence of steps or procedures necessary to achieve specific engineering outcomes. These engineering workflows may encompass user interactions with various user interface elements within software applications, such as menus, buttons, input fields, dialog boxes, and other interactive components. As an example, in the domain of building automation and control, a user may submit a query related to engineering workflows, for instance: *"How do I configure the commissioning laptop network connection?".* This query is intrinsically linked to an engineering workflow as it involves a sequence of steps that must be executed in a particular order to attain the desired outcome, namely the configuration of the network connection for a commissioning laptop. The workflow may necessitate navigation through multiple software screens, the selection of specific options, and the entry of configuration parameters, all of which must be performed in a precise sequence to ensure correct execution.

As used herein, the phrase "software application compatible with the engineering domain" refers to a software application specifically designed to support the engineering tasks and workflows associated with a particular engineering domain. Such software applications may include, but are not limited to, computer-aided design (CAD) software, simulation software, configuration software, and other types of software tools utilized within engineering domains. For example, in the domain of building automation and control, a software application compatible with the engineering domain may include a building automation configuration tool that allows users to design, configure, and commission building automation systems. This software application may provide a user interface for configuring devices, setting up communication networks, and testing system functionality, among other features.

The system 100 includes the one or more storage units 104 configured to store one or more knowledge bases 106. The one or more knowledge bases 106 comprise of domain-specific information pertaining to the one or more engineering resources and the one or more engineering workflows associated with the software application.

The one or more storage units 104 can include, but are not limited to, hard disk drives, solid-state drives, flash memory devices, random access memory (RAM) devices, or other types of data storage devices. The one or more storage units 104 can be physically located in close proximity to the one or more processing units 108, or can be remote storage units accessible through a network connection.

The one or more knowledge bases 106 have a collection of data and information that facilitates efficient retrieval and use of the information. The one or more knowledge bases 106 may take the form of a physical database, a digital repository, or a combination thereof. For example, the one or more knowledge bases 106 may include relational databases stored on a hard disk drive, a collection of documents stored on a file server, or be implemented as a cloud-based data storage system. The one or more knowledge bases 106 comprise domain-specific information, which refers to information that is pertinent to a specific engineering domain, such as building automation, industrial automation, or process control.

In an embodiment, the one or more knowledge bases 106 include domain-specific information pertaining to the one or more engineering resources including at least one of: tools, features, specifications documentation, guidelines documentation, standards documentation, protocols documentation, or predefined best practices documentation associated with at least one of the engineering domain or the software application. For example, in the domain of building automation and control, the one or more knowledge bases 106 may include domain-specific information such as tools for device configuration, features for network setup, detailed technical specifications for system components, guidelines for optimal system design, communication protocol standards, and predefined best practices for system architecture.

In an embodiment, the one or more knowledge bases 106 comprise documentation pertaining to the one or more engineering workflows associated with the software application, the documentation comprising at least one of: help documentation comprising information pertaining to usage, features, and troubleshooting associated with the software application, or user workflow documentation comprising information pertaining to a plurality of sample engineering workflows associated with the software application. The documentation may be provided in various formats, such as but not limited to, PDF, DOCX, HTML, or other file formats, and may include text and multimedia content such as images, videos, and flow diagrams, to facilitate user understanding and navigation of the software application. Additionally, the documentation may be organized in a structured manner, such as through the use of tables of contents, indexes, and hyperlinks, to enable quick and easy access to specific information. Furthermore, the documentation may be updated regularly to reflect changes and updates to the software application, ensuring that users have access to the most current and accurate information.

As an example, in the domain of building automation and control, the one or more knowledge bases 106 may include help documentation that provides detailed information on how to use the building automation configuration tool, descriptions of its features, and troubleshooting steps for common issues. Additionally, the one or more knowledge bases 106 may contain user workflow documentation that includes a variety of sample engineering workflows, such as but not limited to, step-by-step guides for configuring HVAC systems, setting up lighting controls, and integrating security systems within the software application. This documentation supports users in efficiently navigating and utilizing the software application to achieve their engineering objectives.

The system 100 includes the one or more processing units 108 communicably coupled to the one or more storage units 104 via a network 110. Across embodiments, the network 110 may be a wired or wireless network, and may be implemented using a variety of protocols and technologies, such as but not limited to, Ethernet, Wi-Fi, Bluetooth, or other communication protocols. The network 110 may also be a local area network (LAN), a wide area network (WAN), a metropolitan area network (MAN), or a global network, such as the Internet.

In embodiments where the one or more storage units 104 are physically located in close proximity to the one or more processing units 108, the network 110 may be a wired network connection, such as an Ethernet connection, a USB connection, and the like. In some embodiments, the network 110 may be a wired network connection, such as a WAN connection or a LAN connection, or a wireless network connection, such as a Wi-Fi connection or a cellular network connection. It will be appreciated that the network 110 may be implemented using a variety of protocols and technologies, such as but not limited to, TCP/IP, HTTP, FTP, or other communication protocols. The network connection may also be implemented using a variety of network architectures, such as but not limited to, a client-server architecture, a peer-to-peer architecture, or a distributed architecture.

Throughout the present disclosure, the term "processing unit" means any type of computational circuit, such as but not limited to, a microprocessor, a microcontroller, a complex instruction set microprocessor, a reduced instruction set microprocessor, a very long instruction word microprocessor, an explicitly parallel instruction computing microprocessor, a graphics processor, a digital signal processor (DSP), or any other type of processing circuit. The one or more processing units 108 may also include embedded controllers, such as generic or programmable logic devices, application-specific integrated circuits, single chip computers, and the like. The system 100 may be implemented using a single processing unit 108 or distributed across multiple processing units 108, depending on the required computational resources for the context-aware response generation, scalability, and performance considerations.

Across embodiments, the one or more processing units 108 can be located on a local computer, or can be cloud-based, wherein the one or more processing units 108 are remotely located and accessible through a network connection. In one embodiment, the one or more processing units 108 may be located on a local computer, such as a desktop or laptop computer. In such a configuration, the one or more processing units 108 perform tasks directly on the local machine. In another embodiment, the one or more processing units 108 may be cloud-based. In this configuration, the one or more processing units 108 are located on remote servers and are accessible through a network connection, such as the Internet. The tasks performed by the one or more processing units 108 are executed on these remote servers. In yet another embodiment, the system 100 may employ a combination of both local and cloud-based processing units 108, where certain tasks are performed locally on the user's on-site computer while others are executed on remote servers, providing a hybrid approach that leverages the advantages of both local and distributed computing. This flexibility allows the system 100 to be adaptable to various hardware configurations and computational environments.

The one or more processing units 108 are configured to receive the user query from the one or more user devices 102. The one or more processing units 108 may receive the user query through the network 110 that enables data exchange between the one or more user devices 102 and the one or more processing units 108.

The one or more processing units 108 are configured to create one or more indexes of the domain-specific information stored in the one or more knowledge bases. The one or more processing units 108 are configured to parse the user query to determine and retrieve an augmented context for the user query from the one or more knowledge bases 106 using the one or more indexes. The one or more processing units 108 are further configured to provide the user query and the retrieved augmented context from the one or more knowledge bases 106 to a language model to generate a context-aware response corresponding to the user query. The specific configuration and tasks executed by the one or more processing units 108 in relation to the system 100 of the present disclosure will be explained in further detail later.

It will be understood that the system 100 may be implemented in a variety of environments, such as but not limited to, a cloud computing environment, a virtualized environment, or a distributed computing environment.

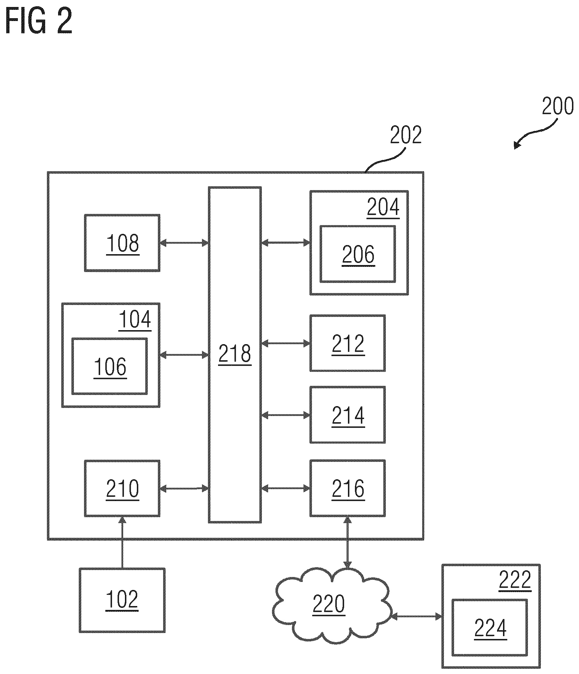

FIG 2 is a block diagram of an exemplary architecture 200, in which an embodiment of the present disclosure can be implemented. The architecture 200 includes a computer 202. As used herein, the term "computer" refers to a programmable electronic device capable of performing calculations, processing information, and executing instructions. This includes, but is not limited to, a general-purpose computer, a specialized computer, or any other device that can perform the functions described herein. The computer 202 may be an on-site computer located in the environment or an off-site computer operable by a remote user.

The computer 202 includes the one or more processing units 108, an accessible memory 204, the one or more storage units 104, an input unit 210, an output unit 212, a network interface 216, and a bus 218.

The one or more processing units 108 may include any type of computational circuit, such as but not limited to, a microprocessor, a microcontroller, a complex instruction set microprocessor, a reduced instruction set microprocessor, a very long instruction word microprocessor, an explicitly parallel instruction computing microprocessor, a graphics processor, a digital signal processor (DSP), or any other type of processing circuit. In an embodiment, the one or more processing units 108 may be embodied in one or more web servers.

The memory 204 may be a non-transitory volatile memory or a non-volatile memory. The memory 204 may be coupled for communication with the one or more processing units 108, such as being a computer-readable storage medium. The one or more processing units 108 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. The memory 204 includes a module package 206. The module package 206 is stored in the form of machine-readable instructions on any of the above-mentioned storage media and is in communication with and executed by the one or more processing units 108.

The one or more storage units 104 may be non-transitory storage medium configured for storing the one or more knowledge bases 106 having domain-specific information pertaining to the one or more engineering resources and the one or more engineering workflows associated with the software application. The one or more storage units 104 may be equipped with storage devices, which may include, but not limited to, traditional hard disk drives (HDDs) and/or solid-state drives (SSDs).

The input unit 210 is configured to receive the user query as a natural language input from the user and communicate the received input to the one or more processing units 108. The input unit 210 may include ports to receive input from the one or more user devices 102 such as keypad, touch sensitive display, etc. capable of receiving user inputs.

The output unit 212 may include ports to output data via an output device, which may be an indication device 214. The indication device 214 may be a display device supporting a graphical user interface for facilitating user interaction and displaying the user inputs and the generated context-aware responses corresponding to the user query, by execution of the method of the present disclosure.

The network interface 216 is configured to handle network connectivity, bandwidth, and network traffic with a data exchange network 220, which serves to establish communication between one or more servers 222 hosting the language model 224 and the one or more processing units 108 of the computer 202.

The bus 218 acts as an interconnect between the one or more processing units 108, the memory 204, the one or more storage units 104, the input unit 210, the output unit 212, and the network interface 216.

In an alternate implementation, the language model 224 may be hosted by the computer 202, which may be a local machine. This can enable local processing, reducing reliance on external servers for generating context-aware responses. Such a configuration can be advantageous in environments where low latency is critical or where consistent network connectivity cannot be guaranteed. Further, such a configuration may ensure data security by keeping sensitive information within the local system.

Those of ordinary skill in the art will appreciate that the architecture depicted in FIG 2 may vary for particular implementations. For example, other peripheral devices such as an optical disk drive and the like, Local Area Network (LAN) / Wide Area Network (WAN) / Wireless (e.g. Wi-Fi) adapter, graphics adapter, disk controller, input/output (I/O) adapter etc. may also be used in addition to or in place of the hardware depicted. The depicted example is provided for the purpose of explanation only and is not meant to imply architectural limitations with respect to the present disclosure.

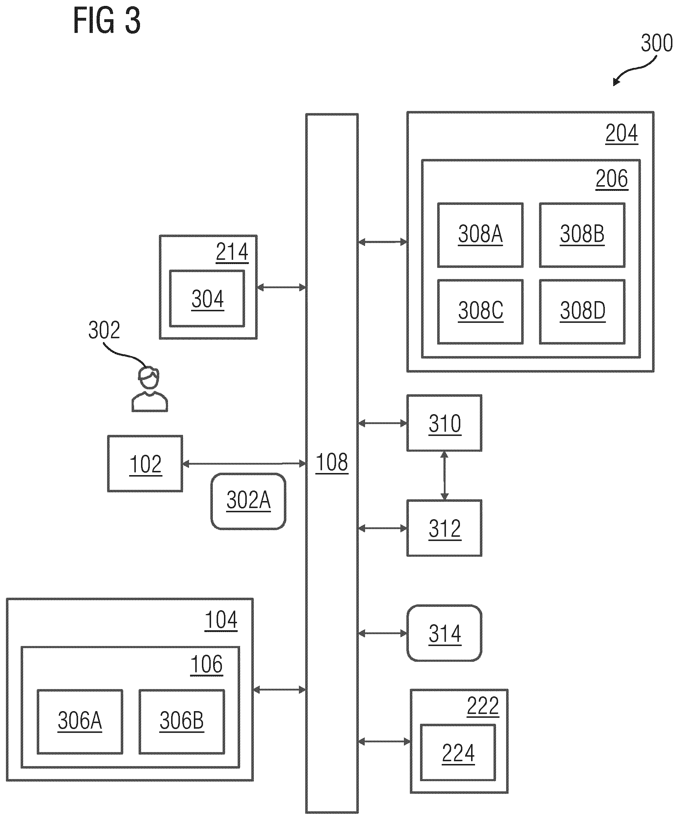

FIG 3 is a schematic diagram 300 that illustrates components and data interactions associated with the processing of user queries, according to an exemplary embodiment of the present disclosure.

As illustrated, a user 302 interacts with one or more user devices 102 to provide a user query 302A, which may be a natural language statement in text format. The user 302 also interacts with the software application compatible with the engineering domain via a display screen 304 of the indication device 214, which is communicably connected to the one or more processing units 108. The display screen 304 delivers user interfaces that facilitate user interaction with the software application.

The one or more storage units 104 store the one or more knowledge bases 106. The one or more knowledge bases 106 include first domain-specific information 306A pertaining to the one or more engineering resources and second domain-specific information 306B pertaining to the one or more engineering workflows associated with the software application. The first domain-specific information 306A and the second domain-specific information 306B may be collectively referred to as domain-specific information 306A, 306B. In an embodiment, the domain-specific information 306A, 306B may be stored in a blob storage 310 (Binary Large Object storage 310) communicably connected to the one or more processing units 108, thereby providing a scalable and accessible solution for managing large volumes of data. As used herein, the term "blob," an acronym for Binary Large Object, refers to a substantial aggregation of data in binary format that does not necessarily adhere to any specific file format. Blob storage systems can maintain these data aggregations within non-hierarchical storage environments referred to as data lakes.

The memory 204 includes the module package 206. The module package 206 is stored in the form of machine-readable instructions and is in communication with and executed by the one or more processing units 108. The module package 206 includes a user query reception module 308A, an indexation module 308B, a query parsing and content retrieval module 308C, and a communication module 308D.

The user query reception module 308A corresponds to a set of machine-readable instructions that facilitates the receipt of the user query 302A provided by the user 302 through the one or more user devices 102, by the one or more processing units 108.

The indexation module 308B corresponds to a set of instructions that facilitates the creation of the one or more indexes of the domain-specific information 306A, 306B stored in the one or more knowledge bases 106 by the one or more processing units 108. The indexation module 308B ensures that the domain-specific information 306A, 306B is organized and indexed efficiently, enabling rapid retrieval of data relevant to the user query 302A from the one or more knowledge bases 106 for further processing. The one or more processing units 108 are configured to create the said one or more indexes of the domain-specific information 306A, 306B stored in the one or more knowledge bases 106.

Initially, the domain-specific information 306A, 306B may be retrieved from the blob storage 310. The one or more indexes refer to data structures that facilitate efficient retrieval and searching of the domain-specific information, allowing the system 100 to quickly locate and access relevant information in response to the user query 302A. The one or more indexes may be created based on various attributes of the domain-specific information, such as but not limited to keywords, phrases, concepts, entities, and relationships, among others.

Across embodiments, the one or more indexes can include, but are not limited to, inverted indexes, hash tables, binary search trees, and other types of data structures that enable fast and efficient searching and retrieval of data. In one embodiment, the domain-specific information is tokenized and stored in a keyword database with one or more keyword (inverted) indexes. The one or more indexes can be stored in various types of storage systems, such as but not limited to cloud storage, to ensure scalability and accessibility.

The one or more indexes may be stored in a cloud storage unit 312, which is communicably coupled to the blob storage 310. Additionally, the cloud storage unit 312 is communicably coupled to the one or more processing units 108, and the indexed information (i.e., the one or more indexes) stored in the cloud storage unit 312 can be accessed by the one or more processing units 108 for further processing.

In an embodiment, the one or more processing units 108 are configured to create the one or more indexes of the domain-specific information 306A, 306B as one of: one or more keyword indexes, one or more vector indexes, or a combination thereof. As used herein, keyword indexes refer to data structures that map keywords and phrases to their corresponding locations in the one or more knowledge bases, allowing for efficient retrieval of information related to a specific topic or concept. In keyword indexes, each keyword or phrase is associated with a list of pointers or references to the locations in the one or more knowledge bases 106 where the keyword or phrase appears. As used herein, vector indexes refer to data structures that represent the domain-specific information as vectors in a multi-dimensional space. Each vector represents a piece of information, such as a document or a concept, and is characterized by a set of numerical values that capture its semantic meaning. The vectors are organized in a way that allows for efficient similarity search and retrieval of information.

In an embodiment wherein the one or more processing units 108 create a combination of one or more keyword indexes and one or more vector indexes, the system 100 leverages the distinct advantages of each index type for efficient retrieval of domain-specific information. For example, the one or more keyword indexes can be used to quickly identify relevant documents or concepts, while the one or more vector indexes can be used to rank the results based on their semantic similarity to the user query 302A.

The query parsing and context retrieval module 308C corresponds to a set of machine-readable instructions that facilitate the parsing of the user query 302A and the retrieval of relevant context from the domain-specific information 306A, 306B stored in the one or more knowledge bases 106. The one or more processing units 108 are configured to leverage the query parsing and context retrieval module 308C to parse the user query 302A to determine and retrieve an augmented context 314 for the user query 302A from the one or more knowledge bases 106 using the one or more indexes. As used herein, "augmented context" 314 refers to additional relevant information retrieved from the domain-specific one or more knowledge bases 106 that enhances the understanding and processing of the user query 302A by providing a richer, more comprehensive context.

In one embodiment, where the one or more indexes are keyword indexes, parsing the user query 302A involves analysing the user query 302A to identify key elements such as keywords and/or phrases contained therein. This parsing may involve using Natural Language Processing (NLP) techniques that tokenize the user query 302A into individual words or phrases and then apply part-of-speech tagging and entity recognition algorithms to accurately extract the key elements. Named entity recognition (NER) algorithms may be used to identify and classify entities within the user query 302A, such as names, dates, and technical terms.

Once these key elements are identified, the one or more processing units 108 can access the one or more keyword indexes to efficiently map, locate, and retrieve information relevant to the key elements from the one or more knowledge bases 106. This retrieved relevant information provides the augmented context 314 for the user query. The augmented context 314 may include not only the directly retrieved data related to the identified keywords and/or phrases, but also additional relevant details, related concepts, and supplementary information that can enhance the overall context of the user query.

In essence, the one or more processing units 108 leverage the query parsing and context retrieval module 308B to analyse the user query 302A, identify key elements such as keywords, and phrases, and map these key elements to the indexed domain-specific information to determine data relevant to the user query 302A contained therein, which serves as the augmented context 314. Advantageously, the augmented context 314 allows the system 100 to construct a more complete picture of the user's intent as compared to the initial user query 302A, facilitating more accurate and context-aware response retrieval.

In another embodiment, the one or more processing units 108 are configured to create the one or more indexes by generating vector embeddings for the domain-specific information 306A, 306B stored in the one or more knowledge bases 106 (which may be uploaded on to the blob storage 310 for remote accessibility) using an embedding model (not shown), and cause storage of the vector embeddings in one or more vector databases (not shown) in a structured format. The embedding model used to generate the vector embeddings is a machine learning model, such as a neural network, that is trained on vast domain-specific information to learn the semantic relationships between the data entities. The embedding model can be trained on the domain-specific information using a variety of training methods, such as supervised learning, unsupervised learning, or semi-supervised learning. The embedding model can take the domain-specific information as input and output a vector representation of the information, where each vector represents a data entity in a multi-dimensional space. Across implementations of the embodiment, techniques such as but not limited to Word2Vec, Bidirectional Encoder Representations from Transformers (BERT), Node2Vec, or a feasible combination thereof can be employed for generating the vector embeddings.

For example, in the engineering domain of building automation and control, the embedding model can be trained on a large corpus of text data related to building automation systems, including but not limited to, technical documentation, user manuals, and configuration guides. The text data can include information about various data entities, such as devices (e.g. sensors, actuators, controllers), systems (e.g. HVAC, lighting, security), and concepts (e.g. energy efficiency, indoor air quality). Using natural language processing (NLP) techniques, the embedding model can analyse the text data and identify patterns and relationships between the data entities. The model can also leverage techniques such as named entity recognition (NER) and part-of-speech (POS) tagging to extract relevant information from the text data. The embedding model can learn to represent these data entities as vectors in a multi-dimensional space.

In the embodiment, once the vector embeddings are generated, the one or more processing units 108 are configured to cause storage of the vector embeddings in the one or more vector databases in a structured format. The one or more processing units 108 are further configured to analyse the vector embeddings stored in the one or more vector databases to identify relationships between data entities in the domain-specific information 306A, 306B and create one or more graph databases (not shown) comprising vector embeddings of nodes and edges reflecting the said relationships.

In the embodiment, the analysis of the vector embeddings may be performed using the embedding model used to generate the vector embeddings. The embedding model is trained on a large corpus of text data including but not limited to engineering domain-specific technical documentation, user manuals, and configuration guides, among others. This training data allows the embedding model to learn semantic relationships between data entities in the engineering domain. The embedding model can learn to represent these data entities as vectors in a high-dimensional space, where semantically similar entities are mapped to nearby points in the space. For instance, in a building automation and control domain, the vector representation of a "temperature sensor" can be closer to the vector representation of a "thermostat" than to the vector representation of a "security camera", reflecting the semantic relationships between these entities in the domain.

In the embodiment, the identified relationships between data entities in the domain-specific information 306A, 306B are used to create the one or more graph databases comprising vector embeddings of nodes and edges. The nodes in the graph database represent the data entities, such as devices, systems, and concepts, and the edges represent the relationships between the data entities. The vector embeddings of the nodes and the edges are used to capture the semantic relationships between the data entities, allowing for efficient querying and retrieval of the domain-specific information. In one of the graph databases, the vector representation of a "temperature sensor" can be connected to the vector representation of a "thermostat" through an edge, indicating that they are semantically related. Similarly, the vector representation of a "security camera" can be connected to the vector representation of a "security system" through an edge, indicating that they are semantically related. Advantageously, the one or more graph databases can be used to support a variety of applications, such as querying, reasoning, and inference, providing a powerful tool for analysing and understanding the domain-specific information 306A, 306B.

In the embodiment, the one or more processing units are configured to determine the augmented context for the user query from the one or more knowledge bases by generating vector embeddings of the user query and mapping the vector embeddings of the user query to the vector embeddings of the nodes and the edges in the one or more graph databases.

In the embodiment, to generate the vector embeddings of the user query 302A, the one or more processing units 108 may use the same embedding model that was used to generate the vector embeddings of the domain-specific information 306A, 306B. The embedding model takes the user query 302A as input and outputs a vector representation of the user query 302A, which captures the semantic meaning of the user query 302A. The vector embeddings of the user query 302A are then mapped to the vector embeddings of the nodes and the edges in the one or more graph databases. This is done by computing the similarity between the vector embeddings of the user query 302A and the vector embeddings of the nodes and the edges in the one or more graph databases. The similarity may be computed using a distance metric, such as but not limited to cosine similarity or Euclidean distance, which measures the proximity between the vector embeddings in the multi-dimensional space. The nodes and the edges in the one or more graph databases that have vector embeddings that are similar to the vector embeddings of the user query 302A are identified as relevant to the user query 302A. The relevant nodes and edges are then used to determine the augmented context 314 for the user query 302A.

For example, in the domain of building automation and control, if the user query 302A is *"How do I configure an M-Bus device?",* the embedding model generates a vector embedding of the user query 302A that captures the semantic meaning of the user query 302A. A Meter-Bus device or an M-Bus device is a type of device that uses the M-Bus protocol, a standardized communication protocol for remote reading of meters and other devices in building automation systems. The M-Bus protocol is used to connect devices such as heat meters, water meters, and energy meters to a central control system. The vector embedding of the user query 302A is then mapped to the vector embeddings of the nodes and the edges in one of the one or more graph databases, which identifies the nodes and the edges that are relevant to the user query 302A, such as the nodes representing the M-Bus protocol, the devices that use the M-Bus protocol, and the edges representing the relationships between the devices and the protocol. The relevant nodes and edges are then used to determine the augmented context 314 for the user query 302A, which reflects the semantic relationships between the M-Bus protocol, the devices, and the building automation system.

In one embodiment, the domain-specific information 306A, 306B stored in the one or more knowledge bases 106 (which may be uploaded onto the blob storage 310) is organized into a plurality of chunks, each chunk comprising specific information related to an aspect of the software application and/or the engineering domain. This organization allows for efficient retrieval and processing of the domain-specific information 306A, 306B, as each chunk can be accessed and analysed independently.

In the embodiment, the one or more processing units 108 are configured to parse the user query 302A to determine relevant data pertinent to the user query 302A from the plurality of chunks using the one or more indexes. The parsing process involves analysing the user query 302A to identify the key concepts, entities, and relationships that are relevant to the user query 302A. The one or more indexes are then used to map the key concepts, entities, and relationships to the corresponding chunks of domain-specific information 306A, 306B. Once the relevant chunks have been identified, the one or more processing units 108 are configured to combine data elements of the relevant data (when the relevant data is scattered across the plurality of chunks) to provide the augmented context 314 to the user query 302A. Advantageously, the one or more processing units 108 can bring together the disparate pieces of relevant data to provide a more complete and accurate understanding of the user query 302A.

The one or more processing units 108 are configured to provide the user query 302A and the retrieved augmented context 314 from the one or more knowledge bases 106 to the language model 224 (which may be hosted by the one or more servers 222) to generate a context-aware response corresponding to the user query 302A.

As used herein, the term "language model" refers to a computer-implemented machine learning model designed to represent and understand a language domain. Such a model 224 employs advanced statistical and computational techniques to process and generate human-like language. By being trained on extensive corpus of textual data, the language model 224 learns the probability distribution of word sequences, thus enabling it to predict subsequent words in a sentence, generate coherent text, translate languages, and execute various natural language processing (NLP) tasks. The language model 224 may be trained on the corpus of textual data to learn patterns, relationships, and statistical dependencies between words, phrases, or other linguistic elements. The language model 224 may be implemented using, but not limited to, neural networks, transformer architectures, recurrent neural networks, or other machine learning techniques, and may leverage generative artificial intelligence (AI) capabilities to create novel text, responses, or other content that is contextually relevant and coherent. The language model 224 may be configured to perform various natural language processing (NLP) tasks including, but not limited to, text generation, text completion, translation, summarization, question answering, or text classification.

The language model 224 may be a public language model, an open-source language model, or a private language model, each offering advantages and applications depending on the specific requirements and constraints of the use case. Public language models are widely accessible and can be utilized by a broad audience, while opensource language models allows for customization and community-driven improvements. Private language models may be tailored for specific organizational needs, ensuring data privacy and proprietary enhancements.

In an embodiment, the language model 224 is a large language model (LLM). The LLM is characterized by having billions of parameters, such as but not limited to a range of 10 - 100 billion parameters. This extensive scale enables the LLM to achieve a high level of linguistic proficiency and understanding.

In an embodiment, capabilities of the language model 224 may be accessed by the user in a particular domain-specific software environment (such as, but not limited to, a building automation and control software). The software environment may provide a user-interface to facilitate interaction of the user with the language model. This user-interface may include features such as text input fields, voice recognition capabilities, and interactive dialogue boxes that allow users to enter queries and receive responses in an intuitive manner. Additionally, the user-interface may offer customization options to tailor the interaction based on the user's specific needs and preferences within the domain. In another embodiment, the language model 224 may be accessed through a stand-alone user interface. This stand-alone interface can be a dedicated application or web-based platform that allows users to interact with the language model 224 independently of any specific software environment.

As used herein, the term "context-aware response" refers to a response takes into account the specific context in which the user query 302A is being asked. This context may include the domain-specific information 306A, 306B, the user's intent, and data entities and relationships that are pertinent to the user query 302A. The context-aware response 404 is generated by the language model 224, which uses the user query 302A and the retrieved augmented context 314 to provide a response that is tailored to the specific needs and requirements of the user 302. The context-aware response 404 may be generated using a combination of natural language processing (NLP) and machine learning algorithms, which allow the language model 224 to understand the nuances of the user query 302A and the augmented context 314, and to generate a response that is tailored to the specific needs and requirements of the user 302A.

The context-aware response can include, but is not limited to, a set of instructions or steps to follow, a list of relevant data entities or relationships, a summary of the relevant information, among others. The response is generated based on the patterns and relationships learned by the language model 224 from the augmented context 314 and the user query 302A and is designed to provide the user 302 with accurate and relevant information.

For example, in the engineering domain of building automation and control, if the user query is *"How do I configure an M-Bus device?",* the context-aware response may include a step-by-step guide to configuring the M-Bus device, including specific instructions and settings to use. The response might also include a list of relevant data entities, such as the M-Bus device's manufacturer and model number, as well as any relevant relationships, such as the M-Bus device's compatibility with other systems or devices.

In one embodiment, the one or more processing units 108 may be configured to receive, along with the user query 302A, user information such as but not limited to, one or more of a location of the user, a role of the user (e.g., admin, super-admin, supervisor, machine operator, etc.), and/or access controls associated with the user. The augmented context 314 may be determined by taking into account this user information, thereby enhancing the specificity and accuracy of the context-aware response 404. To determine the augmented context 314, the one or more processing units 108 may evaluate the user information to select relevant domain-specific information from the one or more knowledge bases 106. For example, if the user is identified as a supervisor via the user information, the one or more processing units 108 may retrieve information on team management, worker shift schedules, and performance metrics relevant to the supervisor's responsibilities from the one or more knowledge bases 106 and include the retrieved information in the augmented context 314. As another example, if the user is identified as a machine operator located in a specific manufacturing facility at a geographical location (via the user information), the one or more processing units 108 may retrieve operational data pertinent to that facility, location-specific information pertinent to that facility, and role-specific information pertinent to the machine operator from the one or more knowledge bases 106 and include the retrieved information in the augmented context 314. In yet another example, if the user is an admin with elevated access controls, the one or more processing units 108 may retrieve broader system-level information and administrative guidelines / information from the one or more knowledge bases 106 and include the retrieved information in the augmented context 314.

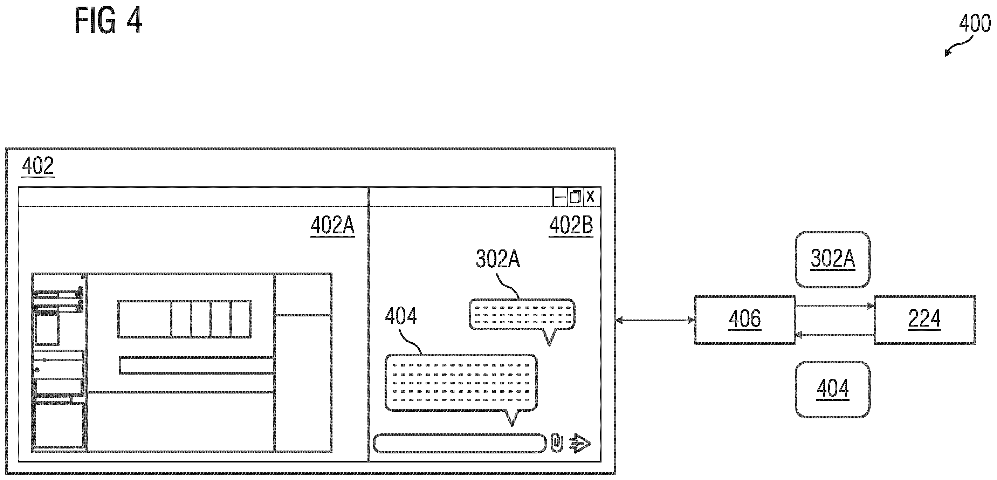

FIG 4 is a schematic diagram 400 illustrating an exemplary implementation for delivering the generated context-aware response 404 to the user 302.

The user 302 interacts with the domain-compatible software application 402 to achieve engineering tasks. The software application 402 may include an application interface 402A and a chat interface 402B. The application interface 402A provides a user interface for the user 302 to interact with the software application 402, and displays information related to the engineering domain, such as system status, device information, and control options. For example, in the engineering domain of building automation and control, the application interface 402A may display a dashboard with various widgets and controls that allow the user 302 to monitor and control different aspects of a building automation system. The application interface 402A may also provide menus, buttons, and other interactive elements that enable the user 302 to navigate and access different features and functions of the software application 402. The chat interface 402B provides a user interface for the user 302 to input the user query 302A and display the corresponding context-aware response 404 generated by the language model 224.

The chat interface 402B provides a conversational interface for the user 302 to input the user query 302A in a conversational manner, such as by typing a question like *"How do I configure the HVAC system?" and* receiving the corresponding context-aware response 404 generated by the language model 224 in text format. In an embodiment, the chat interface 402B may be an integral part of the application interface 402A, thereby providing a seamless and integrated user experience. However, in other embodiments not illustrated herein, the chat interface 402B may be hosted by another application in a standalone manner, thereby allowing the user 302 to access the chat interface 402B independently of the software application 402. For example, the chat interface 402B may be hosted by a web-based application distinct from the domain-compatible software application 402 and may be accessible through a web browser.

A REST API 406 (Representational State Transfer Application Programming Interface) may be employed to provide a programmatic interface for exchanging data between the software application 402 where the user query 302A is received and the language model 224. The REST API 406 satisfies both upstream and downstream data exchange requirements by providing a bidirectional communication channel between the software application 402 and the language model 224. In context of the illustrated implementation, the REST API 406 enables the software application 402 to send the user query 302A to the language model 224 and receive the context-aware response 404 from the language model 224.

In the upstream direction, the REST API 406 receives the user query 302A from the chat interface 402B and sends it to the language model 224 for processing. The REST API 406 may format the user query 302A into a suitable format for processing by the language model 224, such as by converting the user query 302A into a JSON (JavaScript Object Notation) object or an XML (Extensible Markup Language) document.

In the downstream direction, the REST API 406 receives the context-aware response 404 from the language model 224 (which receives the user query 302A and the augmented context 314 as input) and communicates it to the chat interface 402B for display to the user 302. The REST API 406 may format the context-aware response 404 into a suitable format for display by the chat interface 402B, such as by converting the context-aware response 404 into an HTML (Hypertext Markup Language) document or a plain text string.

In an embodiment, the language model 224 is configured to generate a context-aware response corresponding to the user query 302A based on a history of user interactions with the language model 224 prior to receiving the user query 302A. The language model 224 may use the REST API 406 to access and analyse a history of user interactions in a chat session, including previous user queries, responses, and any user feedback.

In the embodiment, the language model 224 may send a request to the REST API 406 to retrieve the chat session history for the user 302. The REST API 406 may return a response containing the chat session history, including previous user queries, responses, and user feedback. The language model 224 may then analyse the chat session history and generate the context-aware response 404 corresponding to the user query 302A.

In the embodiment, the language model 224 may use the chat session history to identify relevant context and preferences. This history may be used to inform the generation of the context-aware response 404 to a specific user query 302A, allowing the language model 224 to take into account the user's previous questions, preferences, and/or behaviour. For example, if a user has previously asked questions about configuring an M-Bus device, the language model 224 may use this information to generate a more detailed and specific response to a subsequent question about troubleshooting an M-Bus device. The language model 224 may also use the chat session history to identify the user's preferences, such as their preferred level of technical detail or their preferred communication style. The language model 224 may then use this information to generate a response that is tailored to the user's preferences.

In an embodiment, the REST API 406 may be used to access the chat session history in a programmatic and standardized manner. The REST API 406 may provide a set of APIs that allow the language model 224 to retrieve and analyse the chat session history. The REST API 406 may also provide a set of data formats and communication protocols that allow the language model 224 to exchange data with the chat interface 402B.

It will be appreciated that the language model 224 may be configured to use the chat session history in a variety of ways, depending on the specific implementation and the requirements of the user. In an embodiment, the language model 224 is trained on a large corpus of text data, including chat session histories, to learn patterns and relationships in the data. The language model 224 may then use this training data to generate responses to user queries that are based on the user's previous interactions and preferences.

Advantageously, the consideration of user interaction history to generate the context-aware response 404 provides more personalized and relevant responses to the user 302, improving user satisfaction and engagement. Additionally, it enables the language model 224 to learn and adapt over time, improving its ability to understand and respond to user queries 302A. Furthermore, the language model 224 can also use the history of user interactions to identify areas where the user 302 may need additional support or training, and to provide targeted recommendations and resources. This can help to improve the overall user experience and to reduce the likelihood of errors or misunderstandings.

In an embodiment, the system 100 (shown in FIG 1) of the present disclosure may be configured specifically for generating context-aware responses 404 pertaining to the engineering domain of building automation and control. In this embodiment, the one or more knowledge bases 106 comprise domain-specific information pertaining to building automation resources and building control workflows.

In a further embodiment, the building automation resources include at least one of: tools (e.g. configuration software, commissioning tools, diagnostic tools), features (e.g. alarm management, trend analysis, energy reporting), specifications (e.g. device communication protocols, data formats, system architecture requirements), guidelines (e.g. installation guides, user manuals, troubleshooting guides), standards (e.g. ASHRAE, IEC, ISO), protocols (e.g. safety protocols, security protocols, regulatory compliance protocols), or predefined best practices associated with building automation and control, such as device configurations, network architectures, control algorithms, energy efficiency strategies, maintenance schedules, security procedures among others.

As used herein, the term "building control workflows" pertains to a sequence of steps or procedures necessary to achieve specific building automation and control outcomes, such as controlling temperature, humidity, and air quality in a building, managing lighting levels and schedules, or optimizing energy consumption. These building control workflows may encompass user interactions with various user interface elements within building automation and control software applications, such as menus, buttons, input fields, dialog boxes, and other interactive components, and may include at least one of: sequences of operations (e.g. startup procedures, shutdown procedures, maintenance routines), control algorithms (e.g. PID control, model predictive control), decision-making processes (e.g. fault detection, alarm handling, energy optimization), business processes (e.g. energy management, maintenance scheduling, reporting and analytics), or user workflows (e.g. configuration and commissioning, monitoring and troubleshooting, user training and support).

Advantageously, this configuration enables the system to provide highly accurate and relevant responses to user queries related to building automation and control. Further, the system of the embodiment facilitates more precise and informed decision-making in building automation and control, reducing errors and improving overall building operations, energy efficiency, and building occupant comfort.

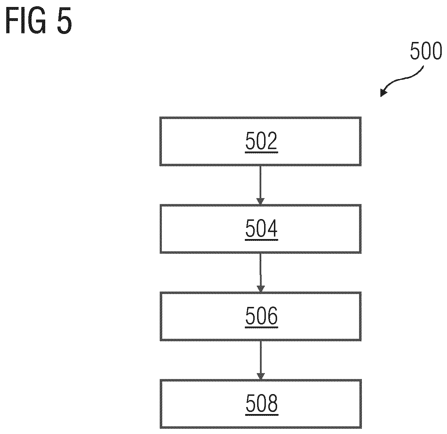

FIG 5 is a flow diagram of a method 500 for generating context-aware responses to user queries pertaining to an engineering domain, according to an exemplary embodiment of the present disclosure.

At step 502, the user query 302A pertaining to at least one of one or more engineering resources or one or more engineering workflows associated with the software application compatible with the engineering domain is received by the one or more processing units 108.

At step 504, the method 500 involves creating, by the one or more processing units 108, one or more indexes of the domain-specific information stored in the one or more knowledge bases 106. The domain-specific information includes the first domain-specific information 306A pertaining to the one or more engineering resources and the second domain-specific information 306B pertaining to the one or more engineering workflows associated with the software application.

At step 506, the user query 302A is parsed by the one or more processing units 108 to determine and retrieve the augmented context 314 for the user query 302A, from the one or more knowledge bases 106 using the one or more indexes.

At step 508, the user query 302A and the retrieved augmented context 314 are provided by the one or more processing units 108 to the language model 224 to generate the context-aware response 404 corresponding to the user query 302A. The user query 302A and the context-aware response 404 may be displayed to the user 302 via the chat interface 402B.

In an embodiment, the one or more knowledge bases 106 comprise domain-specific information pertaining to the one or more engineering resources (i.e., the first domain-specific information 306A) including at least one of tools, features, specifications, guidelines, standards, protocols, or predefined best practices associated with at least one of the engineering domain or the software application.

In an embodiment, the one or more knowledge bases 106 comprise documentation pertaining to the one or more engineering workflows associated with the software application. The documentation comprises help documentation having information pertaining to usage, features, and troubleshooting associated with the software application. The documentation further comprises user workflow documentation including information pertaining to a plurality of sample engineering workflows associated with the software application.

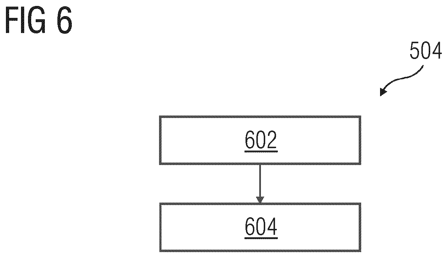

FIG 6 is a flow diagram illustrating method sub-steps involved in creating one or more indexes of domain-specific information 306A, 306B, according to an exemplary embodiment of the present disclosure.

At sub-step 602, vector embeddings are generated for the domain-specific information 306A, 306B stored in the one or more knowledge bases 106, using an embedding model (not shown). The embedding model may be a machine learning model, such as a neural network, that is trained on vast domain-specific information to learn the semantic relationships between the data entities. The embedding model can be trained on the domain-specific information using a variety of training methods, such as supervised learning, unsupervised learning, or semi-supervised learning. The embedding model can take the domain-specific information as input and output a vector representation of the information, where each vector represents a data entity in a multi-dimensional space.

At sub-step 604, the one or more processing units 108 cause storage of the generated vector embeddings in one or more vector databases in a structured format. In an embodiment, the structured format may comprise a hierarchical organization of the vector embeddings, wherein the vector embeddings are grouped into categories or clusters based on their semantic meaning. For example, the vector embeddings may be grouped into categories such as "devices", "systems", "concepts", and the like. In an embodiment, the structured format may comprise a matrix-based organization of the vector embeddings, wherein the vector embeddings are represented as rows or columns in a matrix and the relationships between the vector embeddings are represented as values in the matrix.

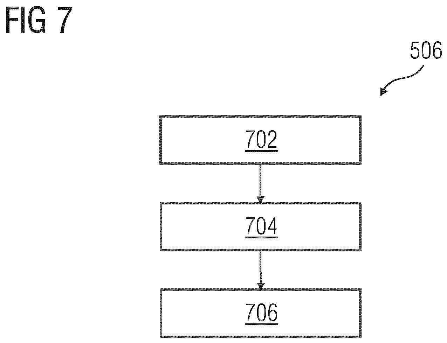

FIG 7 is a flow diagram illustrating method sub-steps involved in determining the augmented context 314 for the user query 302A, according to an exemplary embodiment of the present disclosure.

At sub-step 702, the vector embeddings stored in the one or more vector databases are analysed to identify relationships between data entities in the domain-specific information 306A, 306B. The analysis is then used to create one or more graph databases comprising vector embeddings of nodes and edges reflecting the identified relationships associated with the data entities in the domain-specific information 306A, 306B. The nodes in the one or more graph databases represent the data entities, such as devices, systems, and concepts, and the edges represent the relationships between the data entities. The vector embeddings of the nodes and the edges are used to capture the semantic relationships between the data entities, allowing for efficient querying and retrieval of the domain-specific information 306A, 306B.

At sub-step 704, the user query 302A is parsed to identify elements contained therein and vector embeddings of the elements in the user query 302A are generated using the embedding model.

At sub-step 706, the vector embeddings of the elements in the user query 302A are mapped to the vector embeddings of the nodes and the edges in the one or more graph databases, to provide the augmented context 314 for the user query 302A. Subsequently, the original user query 302A along with the corresponding augmented context 314 are provided to the language model 224 to generate the context-aware response 404. In one embodiment, the language model 224 may be configured to generate the context-aware response 404 corresponding to the user query 302A based on a history of user interactions with the language model 224 prior to receiving the user query 302A.

In an embodiment, the context-aware response 404 may include one or more references to specific modules or data points within the one or more knowledge bases 106. Advantageously, the inclusion of specific references to modules or data points provides a clear and transparent basis for the context-aware response 404, increasing user trust and confidence in the response.

In an embodiment, the method 500 and one or more method embodiments as described hereinabove may be configured for generating context-aware responses to user queries pertaining to the engineering domain of building automation and control, and the one or more knowledge bases 106 may include domain-specific information 306A, 306B pertaining to building automation resources and building control workflows.

As a non-limiting example, when using a software application for building automation and control, of Application Version 1.2, the user 302 may enter a user query *"How do I configure a M-bus device?".* To generate a context-aware response to this query, the augmented context 314 is determined. The augmented context 314 for this query may include information such as but not limited to the type of device being referred to (M-bus device), the specific configuration task being requested (configuration of the M-bus device), relevant technical documentation or manuals related to M-bus devices such as Application Version 1.2 user manual. Previous user interactions or queries related to M-bus devices, such as previous configuration tasks or troubleshooting steps may also be considered for determining the augmented context 314. The augmented context 314 may also include information pertaining to the user's preferred level of technical detail and communication style, such as a preference for step-by-step instructions, based on a conversation history of the user 302 with the language model 224.

Based on the augmented context 314, the language model 224 generates the context-aware response 404 that provides a step-by-step guide on how to configure an M-bus device in Application Version 1.2. The corresponding context-aware response can be as follows:
*"To configure an M-bus device in Application Version 1.2, you can follow these steps:*
   *1. Add an M-bus network: Go to the Startup component and select the M-bus task. Click on "Add M-bus network" and configure the network settings.*
   *2. Add a device in the M-bus network: In the M-bus task, click on "Add a device in M-bus network" and provide necessary information such as the device name, address, manufacturer, and model.*
   *3. Add a data point in M-bus: In the M-bus task, click on "Add a data point in M-bus" and specify the details of the data point, including the data point name, type, unit, and scaling.*
   *4. Importing loopt files in M-bus: If you have a loopt file for the M-bus device, you can import it by selecting the "Importing loopt files in M-bus" option in the M-bus task. This will populate the device and data point information based on the imported file.*
   *5. M-bus tracing: If you need to troubleshoot or monitor the M-bus communication, you can use the M-bus tracing feature. In the M-bus task, select the "M-bus tracing" option and configure the tracing settings.*
*These steps will guide you through the process of configuring an M-bus device in Application Version 1.2."*

In a further embodiment, the language model 224 may prompt the user 302 to ask further questions based on context, in case the user 302 needs further help. This may be done by analysing the user query 302A and the context-aware response 404 provided and identifying potential areas where the user 302 may require additional information or clarification. The language model 224 may then generate a prompt suggestion that encourages the user 302 to ask a follow-up question.

In the above example of configuring an M-bus device, an exemplary prompt may be *"Do you need help with setting up the M-bus network or adding devices to the network? You can ask me questions like 'What are the network settings for M-bus?' or 'How do I add a device to the M-bus network?' and I'll be happy to help."*

Advantageously, the disclosed system and method address the inefficiencies and limitations of static help documentation by providing dynamic, context-aware responses to user queries. This interactive and adaptive approach significantly enhances the user experience by ensuring that relevant information is quickly and accurately retrieved, thereby reducing the time users spend searching through extensive documentation. The use of artificial intelligence and natural language processing allows the system to understand the user's intent and provide personalized guidance, which is beneficial in engineering domains where workflows and resources can be complex and varied.

The integration of domain-specific information one or more knowledge bases ensures that the system provides highly relevant information tailored to the specific engineering tasks and workflows of the user. Consequently, software learning curve for novice users is reduced, allowing them to become proficient with the software applications more quickly, thereby improving their overall productivity. By providing immediate and precise responses, the system and the method of the present disclosure minimize the need for time-consuming manual searches and trial-and-error methods, thus preventing frustration and enhancing user satisfaction.

Furthermore, the interactive nature of the system encourages users to explore and utilize advanced features of engineering software applications, leading to optimal resource utilization and potentially reducing engineering costs. Unlike traditional help documentation that overwhelms users with irrelevant information, the context-aware responses are specifically tailored to the user's current task and context, thereby simplifying the information retrieval process whilst also improving time and cost efficiency.

In critical situations where quick user action is necessary, the system's ability to provide immediate and contextually relevant solutions can prevent delays and missed interventions, ensuring that users can address issues promptly and effectively. This is important in engineering domains where timely and accurate responses are crucial for maintaining system performance and reliability.

The disclosed system and method provide a significant improvement over traditional help documentation by offering an engaging, efficient, and user-friendly solution that enhances productivity, reduces errors, and improves the overall user experience in managing engineering resources and/or workflows. Further, the system and the method of the present disclosure enables users to more effectively and efficiently use the domain-compatible software application, improving overall user satisfaction and reducing the likelihood of user frustration or abandonment.

Furthermore, the system and the method of the present disclosure simplifies information retrieval and improves overall productivity, making it easier for users to access and use the software application features and functionality, and ultimately providing a more accessible and usable help system for users of varied skill levels.

The present disclosure may take the form of a computer program product comprising program modules accessible from computer-usable or computer-readable medium storing program code for use by or in connection with one or more computers, one or more processing units, or instruction execution systems. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation medium. The one or more processing units and program codes for implementing each aspect of the present disclosure may be centralized or distributed (or a combination thereof).

The present disclosure may take the form of a computer-readable storage medium comprising instructions which, when executed by the processing unit, cause the processing unit to perform the method steps described hereinabove. The computer-readable storage medium may include, but not be limited to, a portable computer diskette, a hard disk, a random-access memory (RAM) device, a read-only memory (ROM) device, an erasable programmable read-only memory (EPROM or Flash memory) device, a portable compact disc read-only memory (CDROM), an optical storage device, and a magnetic storage device.

While the present disclosure has been described in detail with reference to certain embodiments, it should be appreciated that the present disclosure is not limited to those embodiments. The foregoing examples have been provided merely for the purpose of explanation and are in no way to be construed as limiting of the present disclosure disclosed herein. Those skilled in the art, having the benefit of the teachings of this specification, may effect numerous modifications thereto and changes may be made without departing from the scope of the disclosure in its aspects.

### List of Reference Signs

- 100: System
- 102: One or more user devices
- 104: One or more storage units
- 106: One or more knowledge bases
- 108: One or more processing units
- 110: Network
- 200: Exemplary architecture
- 202: Computer
- 204: Memory
- 206: Module package
- 210: Input unit
- 212: Output unit
- 214: Indication device
- 216: Network interface
- 218: Bus
- 220: Data exchange network
- 222: One or more servers
- 224: Language model
- 300: Schematic diagram
- 302: User
- 302A: User query
- 304: Display screen
- 306A: First domain-specific information
- 306B: Second domain-specific information
- 308A: User query reception module
- 308B: Indexation module
- 308C: Query parsing and content retrieval module
- 308D: Communication module
- 310: Blob storage
- 312: Cloud storage unit
- 314: Augmented context
- 400: Schematic diagram
- 402: Software application
- 402A: Application interface
- 402B: Chat interface
- 404: Context-aware response
- 406: REST API
- 500: Method
- 502, 504, 506, 508: Method steps
- 602, 604: Sub-steps
- 702, 704, 706: Sub-steps

## Claims

1. A system (100) for generating context-aware responses to user queries pertaining to an engineering domain, the system (100) comprising:
one or more user devices (102) configured to receive a user query (302A) pertaining to at least one of one or more engineering resources or one or more engineering workflows associated with a software application (402) compatible with the engineering domain;
one or more storage units (104) configured to store one or more knowledge bases (106) comprising domain-specific information pertaining to the one or more engineering resources and the one or more engineering workflows associated with the software application (402); and
one or more processing units (108) communicably coupled to the one or more user devices (102) and the one or more storage units (104), the one or more processing units (102) configured to:
receive the user query (302A) from the one or more user devices (102),
create one or more indexes of the domain-specific information stored in the one or more knowledge bases (106),
parse the user query (302A) to determine and retrieve an augmented context (314) for the user query (302A) from the one or more knowledge bases (106) using the one or more indexes, and
provide the user query (302A) and the retrieved augmented context (314) to a language model (224) to generate a context-aware response (404) corresponding to the user query (302A).

2. The system (100) according to claim 1, wherein said system (100) is configured for generating context-aware responses to user queries pertaining to the engineering domain of building automation and control, and the one or more knowledge bases (106) comprise domain-specific information pertaining to building automation resources and building control workflows.

3. The system (100) according to claim 1 or claim 2, wherein the one or more knowledge bases (106) comprise domain-specific information pertaining to the one or more engineering resources including at least one of tools, features, specifications, guidelines, standards, protocols, or predefined best practices associated with at least one of the engineering domain or the software application (402).

4. The system (100) according to any one of the preceding claims, wherein the one or more knowledge bases (104) comprise documentation pertaining to the one or more engineering workflows associated with the software application (402), the documentation comprising at least one of:
help documentation comprising information pertaining to usage, features, and troubleshooting associated with the software application (402), or
user workflow documentation comprising information pertaining to a plurality of sample engineering workflows associated with the software application (402).

5. The system (100) according to any one of the preceding claims, wherein the one or more processing units (108) are configured to create the one or more indexes of the domain-specific information as one of: one or more keyword indexes, one or more vector indexes, or a combination thereof.

6. The system (100) according to any one of claims 1-4, wherein the one or more processing units (108) are configured to:
create the one or more indexes by generating vector embeddings for the domain-specific information stored in the one or more knowledge bases (106) using an embedding model, and cause storage of said vector embeddings in one or more vector databases in a structured format;
analyse the vector embeddings stored in the one or more vector databases to identify relationships between data entities in the domain-specific information, and create one or more graph databases comprising vector embeddings of nodes and edges reflecting the said relationships; and
determine the augmented context (314) for the user query (302A) from the one or more knowledge bases (106) by generating vector embeddings of the user query (302A) and mapping the vector embeddings of the user query (302A) to the vector embeddings of the nodes and the edges in the one or more graph databases.

7. The system (100) according to any one of the preceding claims, wherein the domain-specific information stored in the one or more knowledge bases (106) is organized into a plurality of chunks, each chunk comprising specific information related to an aspect of the software application (402) and/or the engineering domain, and
wherein the one or more processing units (108) are configured to:
parse the user query (302A) to determine relevant data pertinent to the user query (302A) from the plurality of chunks using the one or more indexes, and
combine data elements of the relevant data when the relevant data is scattered across the plurality of chunks to provide the augmented context (314) for the user query (302A).

8. The system (100) according to any one of the preceding claims, wherein the language model (224) is configured to generate the context-aware response (404) corresponding to the user query (302A) based on a history of user interactions with the language model (224) prior to the user query (302A).

9. A method (500) for generating context-aware responses to user queries pertaining to an engineering domain, the method (500) comprising:
receiving, by one or more processing units (108), a user query (302A) pertaining to at least one of one or more engineering resources or one or more engineering workflows associated with a software application (402) compatible with the engineering domain;
creating, by the one or more processing units (108), one or more indexes of domain-specific information stored in one or more knowledge bases (106), the domain-specific information pertaining to the one or more engineering resources and the one or more engineering workflows associated with the software application (402);
parsing, by the one or more processing units (108), the user query (302A) to determine and retrieve an augmented context (314) for the user query (302A) from the one or more knowledge bases (106) using the one or more indexes; and
providing, by the one or more processing units (108), the user query (302A) and the retrieved augmented context (314) to a language model (224) to generate a context-aware response (404) corresponding to the user query (302A).

10. The method (500) according to claim 9, wherein the method (500) is configured for generating context-aware responses to user queries pertaining to the engineering domain of building automation and control, and the one or more knowledge bases (106) comprise domain-specific information pertaining to building automation resources and building control workflows.

11. The method (500) according to claim 9 or claim 10, wherein the one or more knowledge bases (106) comprise domain-specific information pertaining to the one or more engineering resources including at least one of tools, features, specifications, guidelines, standards, protocols, or predefined best practices associated with at least one of the engineering domain or the software application (402).

12. The method (500) according to any one of claims 9-11, wherein the one or more knowledge bases (106) comprise documentation pertaining to the one or more engineering workflows associated with the software application (402), the documentation comprising:
help documentation comprising information pertaining to usage, features, and troubleshooting associated with the software application (402), and
user workflow documentation comprising information pertaining to a plurality of sample engineering workflows associated with the software application (402).

13. The method (500) according to any one of claims 9-12,
wherein creating the one or more indexes of the domain-specific information comprises:
generating vector embeddings for the domain-specific information stored in the one or more knowledge bases (106) using an embedding model, and
causing storage of said vector embeddings in one or more vector databases in a structured format; and
wherein determining the augmented context (314) for the user query (302A) from the one or more knowledge bases (106) comprises:
analysing the vector embeddings stored in the one or more vector databases to identify relationships between data entities in the domain-specific information, for creating one or more graph databases comprising vector embeddings of nodes and edges reflecting the said relationships,
generating vector embeddings of elements in the user query (302A), and
mapping the vector embeddings of the elements in the user query (302A) to the vector embeddings of the nodes and the edges in the one or more graph databases, to provide the augmented context (314) for the user query (302A).

14. The method (500) according to any one of claims 9-13, wherein the language model (224) is configured to generate the context-aware response (404) corresponding to the user query (302A) based on a history of user interactions with the language model (224) prior to the user query (302A).

15. A computer-program product having machine-readable instructions stored therein, which when executed by one or more processing units (108), causes the one or more processing units (108) to perform a method (500) according to any one of claims 9-14.
